# EUROPÄISCHE PATENTSCHRIFT

(11) **EP 1 223 728 B1**
(45) Veröffentlichungstag und Bekanntmachung des Hinweises auf die Patenterteilung: **19.11.2003**
(21) Anmeldenummer: 00127453.9
(22) Anmeldetag: 14.12.2000
(51) Int. Cl.: H04M 1/66

(54) **Telefon mit steuerbarer Unterdrückung der Anrufsignalisierung**
Telephone with controlled suppression of the ringing signal
Téléphone avec suppression contrôlée du signal de sonnerie

(43) Veröffentlichungstag der Anmeldung: 17.07.2002
(73) Patentinhaber: SIEMENS AKTIENGESELLSCHAFT, 80333 München (DE)
(72) Erfinder: Seytter, Fritz, 81667 Muenchen (DE)

(56) Entgegenhaltungen:
- US-A- 4 876 676
- US-A- 5 201 068
- US-A- 5 703 931
- US-A- 5 812 648
- US-A- 6 058 164

## Beschreibung

Die Erfindung betrifft ein Verfahren gemäß dem Obergriff des Patentanspruchs 1 und ein Kommunikationsendgerät gemäß dem Oberbegriff des Patentanspruchs 5.

Solche Kommunikationsendgeräte sind beispielsweise schnurgebundene oder schnurlose, analoge oder digitale Telefone, oder Mobilfunkgeräte, die nach einem der bekannten oder zukünftigen Standards ausgebildet sind.

Telefonanrufe, insbesondere auf Mobiltelefonen, unterbrechen immer häufiger persönliche Gespräche am Arbeitsplatz und zunehmend in Sitzungen. Dies ist zum Einen unhöflich gegenüber dem Gesprächspartner und stört zum Anderen die Konzentration der Gesprächsteilnehmer.

Bei Mobiltelefonen kann zumindest die akustische Signalisierung abgeschaltet werden, wodurch der Anrufer auf eine Sprach-Mailbox umgeleitet wird. Am Arbeitsplatz eingehende Gespräche können zu einer Sekretärin oder auf einen Anrufbeantworter geleitet werden. Dies erfordert vor dem jeweiligen Gespräch eine aktive Handlung und anschließend eine Rücknahme der vorgenommenen Einstellungen. Beides kann, insbesondere bei einem betriebsamen Arbeitstag, leicht vergessen werden. Oftmals wird auch die Störung durch die Anrufsignalisierung beziehungsweise den Rufton in Kauf genommen, und man leitet dann das betreffende Gespräch auf einen Anrufbeantworter. Die Störung ist dann schon eingetreten.

Aus der US-PS 6,058,164 ist ein Telefon bekannt, das in einem ersten Mode eine übliche Kommunikation ermöglicht. In einem zweiten Mode wird an den rufenden Teilnehmer eine Nachricht ausgegeben. Die Umschaltung zwischen den beiden Moden erfolgt durch einen Vergleich der eingestellten Signalisierungslautstärke mit einem vorgegebenen Wert.

Der Erfindung liegt die Aufgabe zugrunde, die Benutzung eines Kommunikationsendgerätes für den Benutzer attraktiver zu machen.

Diese Aufgabe wird erfindungsgemäß für ein Verfahren durch die im Patentanspruch 1 und für ein Kommunikationsendgerät durch die im Patentanspruch 5 angegebenen Merkmale gelöst.

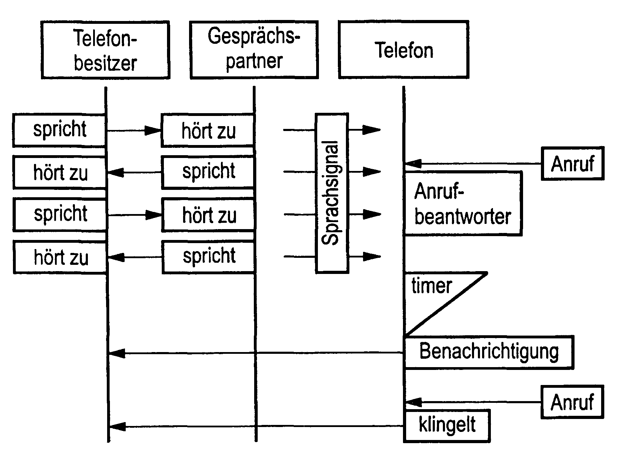

Im Folgenden wird die Erfindung anhand eines in der Zeichnung dargestellten Ausführungsbeispieles beschrieben.

Bei der Erfindung wird das Umgebungsgeräusch von dem Kommunikationsendgerät auf Sprachsignale überwacht. Wenn ein solches Sprachsignal erkannt wird, insbesondere wenn die Stimme des Benutzers erkannt wird, wird bei einem eingehenden Ruf die Anrufsignalisierung unterdrückt.

Die Rechenleistung in heutigen Kommunikationsendgeräten, insbesondere in Mobilfunkgeräten, ist so hoch, dass sie bereits über Spracheingabe steuerbar sind. Wenn das Kommunikationsendgerät beispielsweise in einen Überwachungsmodus geschaltet ist, wird die nähere Umgebung des Endgerätes auf Sprachsignale überwacht. Bei der Detektion von Sprachsignalen wird ein eingehender Telefonanruf dann automatisch auf eine Mailbox oder einen Anrufbeantworter umgeleitet.

Bei einer Weiterbildung der Erfindung wird die Umgebung des Kommunikationsendgerätes auf die Sprachsignale des Benutzers überwacht. Es wird daher eine Sprechererkennung durchgeführt. Bei der Erkennung der Sprache einer voreingestellten Person, beispielsweise des Benutzers, wird ein eingehender Telefonanruf ebenfalls auf eine Mailbox oder einen Anrufbeantworter umgeleitet. Damit kann sichergestellt werden, dass Gespräche Dritter oder beispielsweise eine unterbrechbare Medienpräsentation eingehende Anrufe nicht blockiert.

Im Rahmen der Erfindung kann vorgesehen sein, dass nach einer in seiner Zeitdauer vorgebbaren Sprachpause vom Kommunikationsendgerät ein Signal abgegeben wird, welches auf den eingegangenen oder die eingegangenen Anrufe hinweist. Dieses Signal ist vorzugsweise gleich der Rufsignalisierung.

Bei über Sprache steuerbaren Kommunikationsendgeräten muss zur Realisierung der Erfindung nur wenig geändert werden. So ist möglicherweise die Empfindlichkeit des Mikrofons anzupassen. Des Weiteren kann es bei der Weiterbildung der Erfindung notwendig sein, die Spracherkennung zu einer Sprechererkennung auszubilden. Des Weiteren kann eine zusätzliche Taste oder ein weiterer Punkt im Menü notwendig sein, über den der eben beschriebene Überwachungsmodus vom Benutzer eingeschaltet wird.

In der einzigen Figur ist ein Szenario mit einem Telefon, einem Telefonbesitzer und einem Gesprächspartner dargestellt. In der oberen Hälfte ist die Situation abgebildet, bei der entweder der Telefonbesitzer oder der Gesprächspartner sprechen. In diesem Fall wird ein eingehender Anruf auf einen Anrufbeantworter umgeleitet. Nach einer Sprachpause, deren Zeitdauer in einem Timer festgelegt ist, weist das Telefon durch eine Benachrichtigung auf den eingegangenen Anruf hin.

Ein in einer Sprachpause eingehender Telefonanruf wird durch das erfindungsgemäße Verfahren nicht unterdrückt, das heisst, das Telefon klingelt.

## Patentansprüche

1. Verfahren für die Steuerung einer Anrufsignalisierung bei einem Kommunikationsendgerät,
**dadurch gekennzeichnet dass**
das Umgebungsgeräusch einer Spracherkennungseinrichtung zugeführt wird, und
bei der Detektion eines Sprachsignals eine Anrufsignalisierung unterdrückt wird.

2. Verfahren nach Anspruch 1
**dadurch gekennzeichnet dass**
bei der Erkennung der Sprache eines voreingestellten Sprechers eine Anrufsignalisierung unterdrückt wird.

3. Verfahren nach Anspruch 1 oder 2,
**dadurch gekennzeichnet dass**
wahlweise oder gemeinsam eine akustische Anrufsignalisierung beziehungsweise ein Vibrationsalarm unterdrückt werden.

4. Verfahren nach einem der vorhergehenden Ansprüche,
**dadurch gekennzeichnet dass**
das zu einer unterdrückten Anrufsignalisierung gehörende Gespräch auf einen Sprachspeicher beziehungsweise Anrufbeantworter geleitet wird.

5. Kommunikationsendgerät mit einer Einrichtung zur Spracherkennung,
**dadurch gekennzeichnet dass**
diese Einrichtung zur Abgabe eines Steuersignals ausgebildet ist, über das bei der Detektion eines Sprachsignals eine Anrufsignalisierung unterdrückt ist.

6. Kommunikationsendgerät nach Anspruch 5
**dadurch gekennzeichnet dass**
bei der Erkennung der Sprache eines voreingestellten Sprechers eine Anrufsignalisierung unterdrückt ist.

## Claims

1. Method for controlling ringing signalling in a communications terminal,
**characterized**
**in that** the environmental noise is supplied to a speech recognition device, and
ringing signalling is suppressed on detection of a speech signal.

2. Method according to Claim 1,
**characterized**
**in that** ringing signalling is suppressed on recognition of the voice of a preselected speaker.

3. Method according to Claim 1 or 2,
**characterized**
**in that** acoustic ringing signalling and a vibration alarm are selectively or jointly suppressed.

4. Method according to one of the preceding claims,
**characterized**
**in that** the conversation which is associated with suppressed ringing signalling is passed to a speech memory or to a call answering machine.

5. Communications terminal having a device for speech recognition,
**characterized**
**in that** this device is designed to permit a control signal via which ringing signalling is suppressed on detection of a speech signal.

6. Communications terminal according to Claim 5,
**characterized**
**in that** ringing signalling is suppressed on recognition of the voice of a preselected speaker.

## Revendications

1. Procédé de commande d'une signalisation d'appel dans un terminal de communication, **caractérisé en ce que** le bruit ambiant est amené à un dispositif d'identification vocale et **en ce qu'**une signalisation d'appel est supprimée lors de la détection d'un signal vocal.

2. Procédé selon la revendication 1, **caractérisé en ce qu'**une signalisation d'appel est supprimée lors de l'identification de la voix d'un locuteur présélectionné.

3. Procédé selon la revendication 1 ou 2, **caractérisé en ce qu'**une signalisation d'appel acoustique respectivement une alarme vibratoire sont supprimées ensemble ou l'une ou l'autre au choix.

4. Procédé selon l'une des revendications précédentes, **caractérisé en ce que** la communication correspondant à une signalisation d'appel supprimée est dirigée vers une mémoire vocale respectivement vers un répondeur.

5. Terminal de communication comprenant un dispositif d'identification vocale, **caractérisé en ce que** ledit dispositif est réalisé de manière à pouvoir émettre un signal de commande par l'intermédiaire duquel une signalisation d'appel est supprimée lors de la détection d'un signal vocal.

6. Terminal de communication selon la revendication 5, **caractérisé en ce qu'**une signalisation d'appel est supprimée lors de l'identification de la voix d'un locuteur présélectionné.
